# FASCICULE DE BREVET EUROPEEN

(11) **EP 4 019 871 B1**
(45) Date de publication et mention de la délivrance du brevet: **26.04.2023**
(21) Numéro de dépôt: 21211883.0
(22) Date de dépôt: 02.12.2021
(51) Int. Cl.: F27B 1/00, C10B 47/34, F27B 9/18

(54) **FOUR À SOLES MULTIPLES COMPRENANT DES BRAS INCURVÉS, APPLICATION À LA TORRÉFACTION DE BIOMASSE**
ETAGENOFEN MIT GEBOGENEN ROHREN, ANWENDUNG ZUM RÖSTEN VON BIOMASSE
MULTIPLE HEARTH FURNACE INCLUDING CURVED ARMS, APPLICATION TO THE ROASTING OF BIOMASS

(30) Priorité: 02.12.2020 FR 2012515
(43) Date de publication de la demande: 29.06.2022
(73) Titulaire: Commissariat à l'Energie Atomique et aux Energies Alternatives, 75015 Paris (FR)
(72) Inventeur: CHATROUX, André, 38054 Grenoble Cedex 9 (FR); TRIPOLI, Carmelo, 38054 Grenoble Cedex 9 (FR)
(74) Mandataire: Cabinet Nony

(56) Documents cités:
- EP-A1- 3 411 458
- CN-A- 107 446 599
- FR-A1- 3 086 374
- US-A- 1 503 234
- US-A- 4 215 981
- US-B2- 6 832 564
- ROBERT BROWN ET AL: "Fast Pyrolysis and Bio Oil Upgrading", PPT PRESENTATION, , 17 octobre 2008 (2008-10-17), pages 1-46, XP002555264, Extrait de l'Internet: URL:http://www.scribd.com/doc/7141054/Fast -Pyrolysis-and-Bio-Oil-Upgrading-Presentat ion [extrait le 2021-07-26]

## Description

### Domaine technique

La présente invention concerne un four à soles multiples, encore appelé four à multi-étages (en anglais « *multiple hearth furnace* » d'acronyme MHF).

L'invention vise à améliorer le râblage de la charge de matière à traiter thermiquement au sein du four, notamment en limitant le risque d'accumulation et d'agglomération de la matière devant chaque bras (ratissage).

Par «râblage», on entend dans le cadre de l'invention, l'action de brasser la matière à traiter thermiquement, de l'étaler en la divisant et de la faire transiter dans le four de sole en sole.

Une application privilégiée de l'invention est la torréfaction de biomasse, de préférence de biomasse ligno-cellulosique.

Par « biomasse», on entend dans le cadre de l'invention, tout matériau inhomogène d'origine végétale ou animale contenant du carbone, telle que de la biomasse ligno-cellulosique, des résidus forestiers ou agricoles (paille), qui peut être quasi-sec ou imbibé d'eau comme les déchets ménagers.

En particulier, la biomasse peut être de type ligno-cellulosique, telle que le bois et les matières agricoles et présenter n'importe quel taux d'humidité, de préférence comprenant entre 10 et 60% d'eau, et être introduite dans l'installation selon l'invention sous toutes formes variées telle que plaquettes, granulés...

Bien que décrite en référence à l'application de torréfaction de biomasse, le four à soles multiples selon l'invention peut être utilisé pour de nombreuses autres applications parmi lesquelles on peut citer le traitement thermique de minerais (coke, chamotte...), de charbon, de boues de station d'épuration.

### Technique antérieure

Dans un contexte où la consommation ne cesse d'augmenter, la valorisation de la biomasse est envisagée afin de diversifier les ressources d'énergies. Les filières de conversion thermique par gazéification et combustion sont particulièrement envisagées.

Les usines dites « Biomass to Liquid », désignées sous l'acronyme anglais BtL sont des usines destinées à mettre en oeuvre un procédé de conversion thermochimique de la biomasse par gazéification en vue de produire un carburant liquide. Ces usines BtL ont déjà été largement décrites avec un grand nombre de données économiques tant en investissement qu'en coût de production : [1], [2]. Les usines BtL, plus généralement les usines destinées à produire un carburant gazeux ou liquide à partir de la biomasse, qui sont actuellement conçues sont des projets de démonstration qui visent à tester et valider toute la chaine technologique du procédé de conversion thermochimique. La première étape mise oeuvre ou procédé à part entière consiste en un séchage de la biomasse humide. En effet, l'humidité de la biomasse fraîchement collectée est typiquement comprise entre 30 et 50%, ce taux initial d'humidité variant en fonction du type de biomasse, de la période de collecte et de l'endroit où est stockée la biomasse. Il a déjà été prouvé que l'eau contenue dans le biomasse réduit fortement le rendement de gazéification du fait que cela implique la génération de vapeur d'eau inutile et une évaporation de l'eau nécessaire dans le réacteur de gazéification. En outre, il est d'ores et déjà admis que le séchage naturel de la biomasse ne peut être réellement envisagé dans une application industrielle compte tenu du temps nécessaire : [3], [4], [5].

En d'autres termes, à l'échelle industrielle seul un séchage forcé de la biomasse peut être envisagé. Il semble de même admis que le séchage de la biomasse lignocellulosique en dessous d'un taux d'humidité de l'ordre de 15% s'avère inutile du fait qu'en dessous de cette valeur le bois s'avère être très hygroscopique et ré-adsorbe l'eau lorsqu'exposé à de l'air durant son transfert vers le réacteur de gazéification et son stockage intermédiaire. En outre, l'extraction des derniers pourcents d'humidité augmente considérablement la consommation énergétique. Ainsi, il semble admis qu'un séchage de la biomasse aux alentours d'un taux d'humidité de 15% avant sa gazéification est un bon compromis en termes d'efficacité de rendement de conversion et de consommation énergétique requise.

La torréfaction de la biomasse de préférence ligno-cellulosique, est une étape de prétraitement de la biomasse en vue de son injection sous forme pulvérisée dans un réacteur à flux entraîné (réacteur de gazéification) ou dans un réacteur dit de co-combustion biomasse et charbon dans une centrale thermique à charbon ou en vue de sa mise sous forme de granulés. En effet, la structure fibreuse et élastique de la biomasse rend sa micronisation énergivore et confère au produit broyé des caractéristiques inadaptées à une injection sous forme pulvérisée. La torréfaction est un traitement thermique doux de la biomasse à l'interface entre le séchage et la pyrolyse, généralement réalisé à des températures comprises entre 200 et 300°C et qui vise à éliminer l'eau et à modifier une partie de la matière organique de la biomasse pour casser ses fibres. Autrement dit, ce traitement thermique doux altère la structure fibreuse de la biomasse, facilitant ainsi par la suite son broyage et son injection en réacteur de gazéification ou de co-combustion.

Le prétraitement par torréfaction améliore également les propriétés de la biomasse en vue de son stockage en lui conférant notamment un caractère hydrophobe et une résistance aux dégradations biologiques. La granulation est également une application possible après torréfaction de la matière.

Les produits issus de la torréfaction sont le solide, les gaz de torréfaction et les condensables.

Dans une installation de séchage et de torréfaction de la biomasse ligno-cellulosique actuellement connue, on peut distinguer trois unités principales:
- un réacteur de préchauffage/séchage dans lequel la charge d'alimentation de biomasse est chauffée et une partie de l'humidité peut être évaporée, comme évoqué ci-dessus ;
- un réacteur de torréfaction dans lequel la biomasse séchée est chauffée à la température de torréfaction, l'humidité résiduelle est complètement enlevée et un phénomène de dépolymérisation a lieu ;
- une unité de refroidissement du produit torréfié dans laquelle ce dernier est refroidi dans une atmosphère inerte.

Les réacteurs de torréfaction existants sont de type rotatif, à multi-étages aussi appelés à soles multiples (en anglais « multiple hearth furnace » d'acronyme MHF), à tunnel saturé en liquide ou en vapeur, à vis ou bien encore à lit fluidisé.

Les fours à soles multiples actuels fonctionnent sous pression atmosphérique, dans une gamme de température entre 250°C et environ 1050°C et avec une grande surface de réaction possible. Ils présentent aussi l'avantage de brasser continuellement le produit à traiter. En plus de la torréfaction de biomasse, ils sont utilisés dans le domaine de l'environnement (pyrolyse de déchets solides, régénération de charbon) et des matières premières (calcination et recristallisation de minerais industriels ainsi que pyrométallurgie).

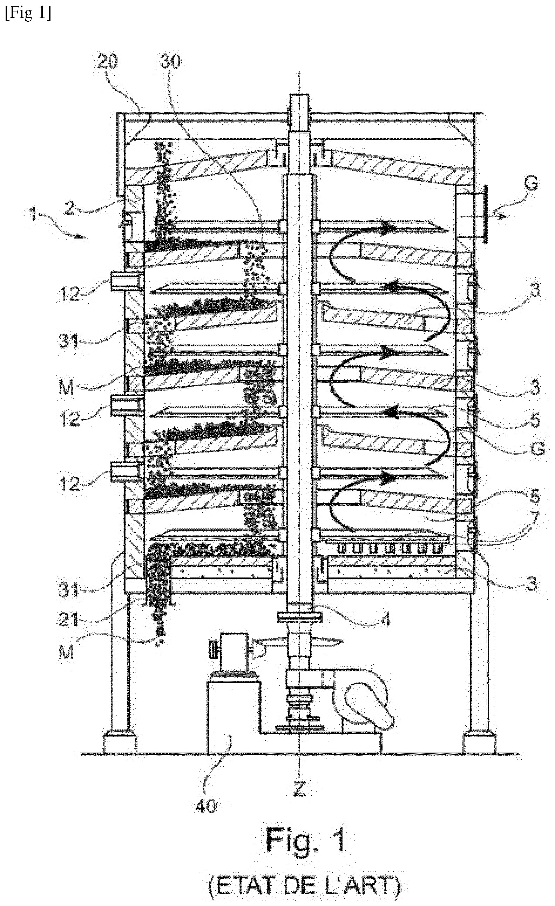

Les figures 1 à 4 représentent schématiquement un four à soles multiples selon l'état de l'art, globalement désigné par la référence 1 avec ses différents composants. Le four 1 comprend une enveloppe 2 à l'intérieur de laquelle est fixée une série de soles ou plaques de cuisson 3 à section circulaire, agencées parallèlement les unes au-dessus des autres. Les soles 3 ainsi que l'enveloppe 2 peuvent être en acier recouvert de matériau réfractaire. Un arbre rotatif 4 est agencé à la verticale selon l'axe central Z du four. L'arbre rotatif 4 peut être mis en rotation au moyen d'un ensemble moto-réducteur 40. L'arbre rotatif 4 supporte des bras 5, dit de râblage, qui y sont fixés en étant agencés au-dessus de chaque sole 3. Par exemple, quatre bras de râblage 5 régulièrement espacés de 90° les uns par rapport aux autres sont fixés au-dessus de chaque sole 3. Les bras de râblage 5 ont chacun pour fonction de brasser la charge M, telle que la biomasse, alimentant le four depuis une ouverture débouchante supérieure 20 de l'enveloppe 2 et la déplacer à travers chaque sole 3 selon un parcours en hélice jusqu'à une ouverture débouchante inférieure 21 de l'enveloppe 2 où la matière est déchargée.

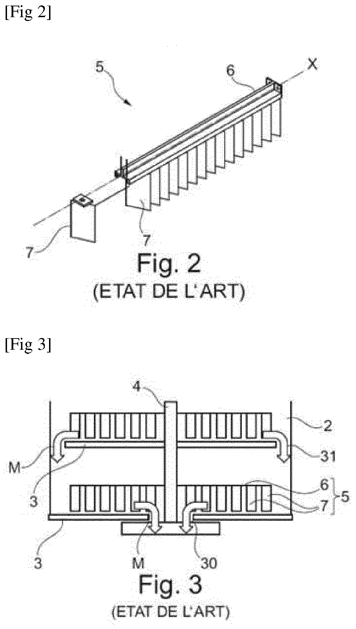

Comme montré en figure 2, chaque bras de râblage 5 comprend un profilé 6 rectiligne sur lequel sont fixées une pluralité de dents identiques 7, dites dents de râblage, à section rectangulaire, agencées parallèles entre elles, perpendiculaires au profilé mais toutes inclinées avec un angle d'inclinaison α différent de 90° par rapport à l'axe longitudinal X du profilé 6.

Par ailleurs, les dents de râblage 7 sont toutes centrées sur l'axe X du profilé 6, c'est-à-dire que la largeur L de chaque dent est répartie équitablement de part et d'autre de l'axe X.

Les dents de râblage 7 avec leur profilé support 6 constituent un outil qui permet de transférer la charge M d'une sole 3 vers la sole adjacente en dessous, de la manière la plus homogène possible, et en la mélangeant le plus possible, afin que chaque particule de charge reçoive la même quantité de chaleur lors de son passage dans le four. Cela permet d'obtenir une transformation thermique, par exemple une torréfaction, la plus homogène possible sur l'ensemble de la charge (diminution des incuits et des morceaux trop cuits...).

Ainsi, comme illustré de matière schématique en figure 3, la matière M est déplacée dans deux soles adjacentes 3, dans des directions opposées, respectivement vers le centre et vers l'extérieur du four et vice-et-versa.

Pour ce faire, chacune des deux soles 3 adjacentes est munie d'une ou plusieurs ouvertures débouchantes de transfert 30, 31 respectivement réalisées à proximité, de préférence autour de l'arbre rotatif 4 et à la périphérie extérieure des soles 3.

Dans l'exemple illustré de la figure 1, l'agencement des différentes soles 3 et de leurs ouvertures débouchantes de transfert 30, 31 génère un déchargement final de la matière M à la périphérie de l'enveloppe 3 tandis que dans l'exemple de la figure 3, l'extraction finale de la matière M est réalisée de manière centrale autour de l'arbre rotatif 4.

Autrement dit, dans un four 1, la charge de matière M est fournie au niveau de la sole supérieure 3 et râblée pour passer à travers celle-ci par une ou plusieurs ouvertures de transfert 30, 31 débouchant sur la sole 3 immédiatement inférieure, et ainsi de suite. La matière M passe donc sur et à travers chaque sole 3 jusqu'à l'ouverture inférieure 21 où la matière est déchargée.

Comme montré en figure 1, des gaz chauds G, par exemple des fumées de combustion, circulant généralement à contre-courant de la charge, portent le four à la température désirée et provoquent la ou les réactions souhaitées de traitement thermique (séchage poussé, torréfaction, etc.) de la charge. La chaleur est donc produite par la combustion soit de constituants de la charge elle-même, soit d'un combustible dédié. Par exemple, des brûleurs à combustible liquide 12 peuvent être agencés au travers de l'enveloppe 2 au niveau de certaines des soles 3. On peut également injecter dans le four de la vapeur d'eau pour en améliorer le contrôle. Le four fonctionne généralement sous atmosphère contrôlée et comporte des moyens de contrôle de la température et du temps de séjour de la charge dans le four. L'alimentation en charge peut être adaptée en continu de manière à maintenir constante l'épaisseur du lit râblé à l'intérieur du four. Un tel four fonctionnant en continu est notamment décrit dans une installation d'incinération des boues de station d'épuration: [6].

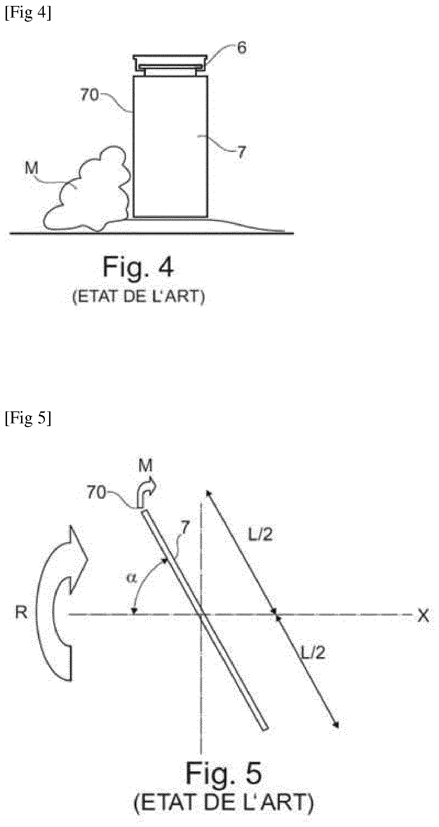

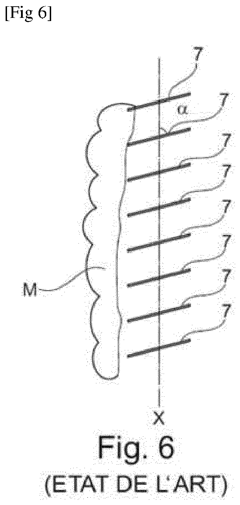

La plupart des brevets selon l'état de l'art, qui concernent des fours à soles multiples, divulgue des géométries conformes à la description précédente, c'est-à-dire avec des bras rectilignes comprenant une pluralité de dents identiques et équidistantes : on peut citer ici les brevets BE1023937, FR701631, FR2574810. Parmi ceux-ci, certaines solutions décrites ont pour objectif de faciliter la manutention et le démontage (FR616412, GB597530), d'autres d'améliorer la forme des dents (GB196534), de les remplacer par des disques tournants (US 1879680), voire d'ajouter des éléments mobiles améliorant la répartition des particules sur les soles (US3834859, US3905757, FR-A 3086374 ou US-A 1503234). Lorsque les inventeurs ont mis en oeuvre un tel four avec des bras rectilignes comprenant une pluralité de dents identiques et équidistantes pour la torréfaction de certaines biomasse ligno-cellulosique, ils ont plusieurs fois été confrontés à un problème d'accumulation irréversible de matière au-devant des dents, comme symbolisé sur les figures 5 et 6.

On voit que les dents identiques 7 d'un même bras en rotation selon R, centrées sur son axe X et inclinées toutes avec le même angle α génèrent un amas ou mur de matière M sur toute la longueur du bras. L'angle d'attaque par rapport à la matière à traiter est égal à π/2-α.

Ainsi, la matière à traiter thermiquement peut présenter une cohésion intergranulaire conduisant à la formation d'une voute entre deux dents consécutives. Autrement dit, lorsque la cohésion intergranulaire de la biomasse est trop forte, les dents poussent une accumulation de biomasse de M. C'est un phénomène de blocage d'écoulement résultant de l'effet Jansen en physique des milieux granulaires secs. Les dents de râblage n'ont alors plus un effet de brassage et déplacement latéral de la matière mais se comportent comme un râteau et balayent la surface de la sole en entrainant une quantité de plus en plus importante de matière qui ne tombera jamais à la sole en-dessous. Autrement dit, la cohésion des particules composant la masse M transforme l'opération de râblage en ratissage
Autrement dit encore, certaines biomasses ont une tendance à l'entremêlement : le bras et ses dents fonctionnent alors comme un râteau accumulant la biomasse devant lui. Lorsqu'un tel ratissage apparait, il accumule toute nouvelle quantité de biomasse injectée dans le four. S'il n'est pas détecté rapidement, ce phénomène conduit à un blocage des bras de râblage et de l'axe du four. Cela impose un arrêt d'urgence du four suivi d'une intervention humaine pour retirer la biomasse.

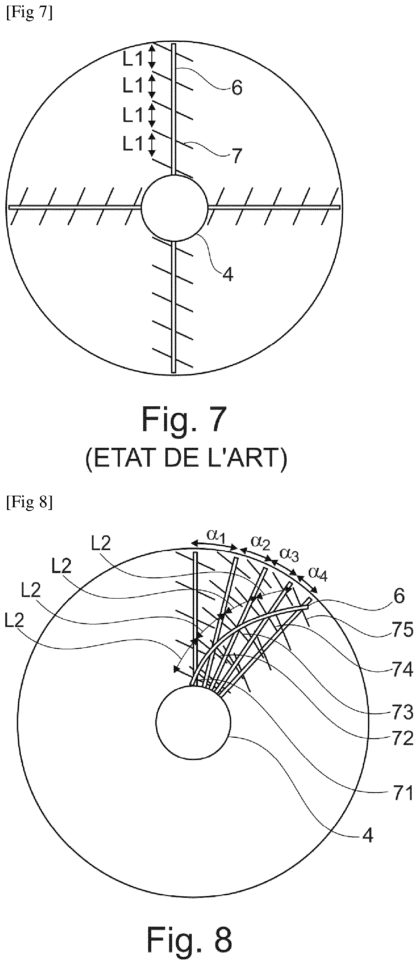

La figure 7 illustre le cas d'un four à plateau selon l'état de l'art comprenant quatre bras rectilignes avec des dents de râblage régulièrement réparties sur chaque bras et équidistante d'une valeur L1.

La solution palliative au problème d'accumulation évoqué ci-dessus, telle qu'elle est mise en oeuvre à ce jour par les inventeurs dans des fours à plateau existants, consiste à ôter une dent sur deux pour augmenter la distance entre elles et supprimer l'effet précité de râteau. Cette solution impose alors d'augmenter la vitesse de rotation des bras pour avoir toujours le même débit de biomasse traitée. Cette augmentation de vitesse n'est pas toujours techniquement faisable.

Une autre solution au problème a déjà été proposé dans le brevet US2390675 qui concerne des fours réalisant un traitement thermique de boues de chaux. Ces dernières adhèrent aux dents de râblage et le brevet propose, en fonction du nombre de bras, une répartition particulière des dents permettant d'en augmenter l'écartement. Cette solution n'est adaptée qu'aux boues de chaux.

Pour améliorer la répartition de la matière à traiter sur la sole de four, des fours ont été conçus avec sole tournante et bras de râblage fixe.

Par exemple, le brevet US3740184 divulgue un four sans bras, avec des dents de râblage fixées à la paroi au-dessus de la sole tournant et qui sont refroidies par un fluide circulant dans un nid d'abeille. Les dents ne sont pas alignées mais sont parallèles entre elles.

Le but de l'invention est de proposer une autre solution au problème d'accumulation de biomasse par ratissage, qui soit simple à mettre en oeuvre et efficace.

### Exposé de l'invention

Pour ce faire, l'invention concerne, sous l'un de ses aspects, un four à soles multiples, destiné à traiter thermiquement une charge de matière M, comprenant :
- une enveloppe d'axe central comprenant :
- une ouverture débouchante supérieure, destinée à être alimentée par la charge de matière à traiter,
- une ouverture débouchante inférieure par laquelle la charge de matière traitée est destinée à être évacuée,
- un arbre monté en rotation autour de l'axe central à l'intérieur de l'enveloppe,
- une pluralité de soles fixées à l'intérieur de l'enveloppe et parallèles entre elles, les soles comprenant chacune une ou plusieurs ouvertures débouchantes adaptée(s) pour transférer de la matière M râblée à la sole agencée immédiatement en dessous,
- au moins un bras de râblage fixé à l'arbre rotatif, au-dessus de chaque sole et comprenant des dents de râblage fixées perpendiculairement au bras.

Avantageusement, la ou les ouvertures de transfert d'une sole est(sont) agencée(s) à proximité de l'arbre rotatif tandis que celle(s) de la sole adjacente est(sont) agencée(s) à la périphérie extérieure de ladite sole adjacente.

Dans un tel four, la rotation de l'arbre permet de traiter thermiquement et transférer la matière M râblée par les dents selon un parcours en hélice sur la hauteur de l'enveloppe entre ses ouvertures supérieure et inférieure.

Selon l'invention, le ou les bras de râblage est(sont) incurvés et les dents de râblage de chaque bras sont agencées de sorte que l'angle d'attaque par rapport à la matière M à traiter soit identique pour toutes les dents.

On précise que l'angle d'attaque d'une dent est défini par son arête d'attaque qui est l'arête en contact en premier avec la matière à râbler qui arrive.

Ainsi, lorsque la matière à râbler arrive à la périphérie d'une sole donnée, l'arête d'attaque d'une dent est l'arête latérale extérieure, tandis que lorsque la matière arrive dans la partie centrale d'une sole, l'arête d'attaque est l'arête latérale intérieure. L'arête avant ou d'attaque d'une dent de râblage est l'arête qui, compte tenu du sens de rotation du bras de râblage qui supporte la dent, attaque en premier lieu la matière à traiter au sein du four, tandis que l'arête arrière est celle qui est en contact avec la matière séparée au préalable par l'arête d'attaque.

Ainsi, l'invention consiste essentiellement à conformer des bras de râblage d'un four à soles non plus rectilignes comme selon l'état de l'art mais incurvés avec un même angle d'attaque pour toutes les dents supportées par un bras donné.

Avec un bras de râblage incurvé, on peut augmenter l'écartement entre dents de rablage et donc supprimer à tout le moins réduire le problème de ratissage. Les dents ne sont plus parallèles entre elles mais positionnées de façon à avoir toujours le même angle d'attaque par rapport à la matière à traiter.

Le nombre de bras et de dents peut être maintenu par rapport à une solution selon l'état de l'art à bras rectiligne et permet de traiter le même débit d'entrée avec la même vitesse de rotation des bras.

Autrement dit, la solution selon l'invention permet de conserver les capacités et performances d'un four à soles multiples tout en supprimant le risque de ratissage d'une masse de charge à traiter.

Avantageusement, les arêtes avant des dents, dites arêtes d'attaque, sont équidistantes les unes des autres sur la longueur du bras.

Selon un mode de réalisation avantageux, le ou les bras de râblage est(sont) incurvé(s) selon une portion d'ellipse.

Selon ce mode, les bras de râblage au-dessus d'une même sole sont de préférence incurvés selon une même portion d'ellipse.

De préférence, les dents de râblage présentent chacune une hauteur comprise entre 100 et 500mm pour une longueur comprise entre 100 et 800mm.

Selon une configuration avantageuse, chaque dent de râblage peut être plane. De manière alternative, chaque dent de râblage peut être constituée d'une portion plane comprenant l'arête d'attaque de la matière et une portion défléchie dans le prolongement de la portion plane, la portion plane étant orthogonale à l'axe longitudinal du bras tandis que la portion défléchie est inclinée avec une ou plusieurs inclinaisons différentes de 90° par rapport à l'axe longitudinal du bras.

Lorsque le four selon l'invention est destiné à la torréfaction de biomasse, la température est de préférence comprise entre 200 et 300°C. La température est de préférence encore comprise entre 250 et 300°C pour de la biomasse type bois et entre 220 et 280°C pour de la biomasse de type agricole. En effet, le bois réagit à des températures plus élevées que les biomasses agricoles.

Le four à soles multiples selon l'invention peut être intégré à une installation de conversion thermochimique de biomasse en un gaz de synthèse largement connu sous l'appellation Syngaz, par gazéification dans un réacteur de gazéification en vue de produire un combustible ou un carburant, notamment un carburant liquide, ou un autre produit de synthèse. La synthèse peut être faite selon le procédé Fischer-Tropsch pour produire du gazole liquide ou un autre carburant.

L'invention concerne également l'utilisation du four décrit pour la torréfaction de la biomasse ligno-cellulosique ou pour tout traitement thermique de minerais (coke, chamotte...), de charbon, de boues de station d'épuration ou pour la fabrication d'un combustible de substitution au charbon d'origine fossile....

D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] la figure 1 est est une vue schématique en coupe longitudinale d'un exemple de four à soles multiples selon l'état de l'art.
[Fig 2] la figure 2 est une vue schématique en perspective d'un bras de râblage d'une matière à traiter dans un four selon la figure 1.
[Fig 3] la figure 3 est une vue schématique en coupe longitudinale partielle d'un autre exemple de four à soles multiples selon l'état de l'art.
[Fig 4] la figure 4 est une vue schématique de face d'une dent de râblage de forme rectangulaire selon l'état de l'art, supportée par un bras dans un four selon l'état de l'art, la figure 4 montrant l'amas de matière M qui se forme sur l'arête verticale d'attaque de la matière.
[Fig 5] la figure 5 est une vue de dessus d'une dent de râblage rectangulaire selon l'état de l'art, la figure 5 montre l'angle d'inclinaison α de la dent et par rapport à l'axe longitudinal d'un bras rectiligne.
[Fig 6] la figure 6 est une vue de dessus d'un bras de râblage rectiligne selon l'état de l'art supportant une pluralité de dents toutes centrées sur l'axe longitudinal du bras rectiligne et inclinées avec la même inclinaison.
[Fig 7] la figure 7 est une vue schématique de dessus d'un étage de four selon l'état de l'art à quatre bras de râblage rectilignes, fixés à un axe de rotation et à 90° les uns des autres.
[Fig 8] la figure 8 est une vue schématique de dessus d'un étage de four illustrant la conception d'un bras de râblage incurvé selon l'invention.
[Fig 9] la figure 9 est une vue schématique de dessus d'un étage de four selon l'invention à quatre bras de râblage incurvés, fixés à un axe de rotation et à 90° les uns des autres.

### Description détaillée

Dans la description qui va suivre ainsi que dans l'ensemble de la demande, les termes « avant», « arrière », sont utilisés par référence avec les sens de transfert de la biomasse dans un four à soles multiples selon la présente invention. Ainsi, une arête avant d'une dent de râblage est l'arête qui attaque en premier lieu la matière à traiter au sein du four, tandis que l'arête arrière est celle qui est en contact avec la matière séparée au préalable par l'arête d'attaque.

De même, les termes « supérieur », « inférieur », « dessus », « dessous » sont à comprendre en référence avec la configuration de fonctionnement à la verticale d'un four selon l'invention. Ainsi, l'ouverture débouchante supérieure constitue l'orifice entrée de la matière à traiter thermiquement tandis que l'ouverture inférieure désigne l'orifice de sortie de la matière traitée.

Les figures 1 à 6 relatives à des fours à soles multiples avec bras de râblage rectilignes supportant des dents de râblage selon l'état de l'art ont déjà été commentées en préambule. Elles ne seront donc pas décrites ci-après.

Par souci de clarté, un même élément selon l'état de l'art et selon l'invention est désigné par une seule et même référence numérique.

Comme montré sur la figure 7, un ensemble typique d'un étage de four selon l'état de l'art comprend quatre bras de rablage 6 rectilignes fixés à un axe de rotation 4. Sur chaque bras de râblage 6, les dents 7 sont parallèles et équidistantes sur toute leur longueur avec un écartement L1.

Avec cette configuration typique selon l'état de l'art, chaque bras rectiligne 6 entraine devant lui une masse M à traiter qui s'accumule, lorsque la cohésion des particules composant la masse M transforme l'opération de râblage en ratissage.

Pour résoudre ce problème sans perdre la capacité de râblage ni les performances d'un four donné, les inventeurs ont pensé à augmenter l'écartement entre les arêtes d'attaque des dents 7 à une valeur L2 de façon à empêcher la formation d'une voute des particules de la matière à traiter.

La figure 8 illustre une réalisation d'un bras incurvé selon une portion d'ellipse tel que l'écartement L2 entre les dents 7 est supérieur à la distance L1 de la configuration de la figure 7.

Ici, contrairement à la configuration de la figure 7, ce n'est plus la forme rectiligne du bras qui détermine la position des dents mais c'est d'abord la position géométrique des dents 7 qui sont reliées par un bras incurvé 6.

Ainsi, comme le montre la figure 8, à partir de l'axe de rotation 4, la première dent 71 est choisie à la même position que celle prévue sur le bras linéaire de la configuration de la figure 7.

Puis, une rotation du bras 6 d'un angle α1 est calculée de sorte que la distance entre la dent 71 et 72 soit égale à L2. Cela définit la position et l'angle d'incidence de la dent 72.

On procède de la même manière en poursuivant la rotation du bras 6 d'un angle a2, de sorte que la distance entre la dent 72 et 73 soit égale à L2. Cela définit la position et l'angle d'incidence de la dent 73.

Puis on réitère ces rotations pour toutes les dents adjacentes, jusque celle la plus éloignée de l'axe de rotation 4, qui est référence 75 dans l'exemple illustre de la figure 8. La position et l'angle d'incidence de chaque dent 71 à 75 étant définie, le bras 6 incurvé les relient entre elles.

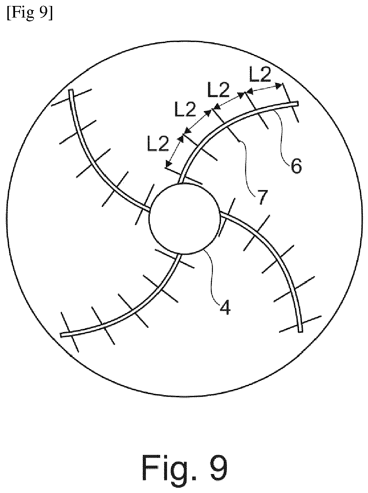

La figure 9 montre une configuration avec quatre bras incurvés 6. On voit que les dents 7 d'un même bras 6 ne sont pas parallèles entre elles, pourtant elles permettent le même brassage et déplacement de la matière à traiter car l'angle d'attaque des dents a été conservé. Le nombre total de dents 7 a lui aussi été conservé et donc la capacité de traitement d'un four selon l'invention est la même que celle d'un four selon l'état de l'art comme selon la figure 7. En outre, les arêtes d'attaque des dents 7 sont équidistantes d'une distance L2 supérieures à la distance L1.

On supprime ainsi le problème de ratissage de la matière selon l'état de l'art, sans perte de capacité ni de performance.

L'invention n'est pas limitée aux exemples qui viennent d'être décrits; on peut notamment combiner entre elles des caractéristiques des exemples illustrés au sein de variantes non illustrées.

D'autres variantes et améliorations peuvent être envisagées sans pour autant sortir du cadre de l'invention.

### Liste des références citées :

[1]: : Tijmensen MJA, Faaij APC, Hamelinck CN, Hardeveld MRM. « Exploration of the possibilities of Fischer Tropsch liquids and power via biomass gasification ». Biomass& Bioenergy 2002; 23: 129-52.
[2]: Haarlemmer G, Boissonnet G, Imbach J, Setier P-A, Peduzzi E. « Second génération BtL type biofuels - a production cost analysis ». Energy & Environmental Science 2012; 7.
[3]: Simpson WT. « Equilibrium Moisture Content of Wood in Outdoor Locations in the United States and Worldwide ». FPL-RN-0268. Forest Products Laboratory: Madison, Wisconsin, 1998.
[4]: Höldrich A, Hartmann H. « In Storage of wood logs - «Drying speed and dry matter losses », 14th European Biomass Conference, Paris, France, 2005.
[5]: Scholz V, Idler C, Daries W « In Energy loss and mould development during storage of wood chips in unventilated piles », 14th European Biomass Conference, Paris, France, 2005.
[6]: C. Brunner «Biological sludge incinération», Waste management, Vol.11,

## Revendications

1. Four à soles multiples (1), destiné à traiter thermiquement une charge de matière M, comprenant :
- une enveloppe (2) d'axe central (Z) comprenant :
une ouverture débouchante supérieure (20), destinée à être alimentée par la charge de matière à traiter,
une ouverture débouchante inférieure (21), par laquelle la charge de matière traitée est destinée à être évacuée,
- un arbre (4) monté en rotation autour de l'axe central (Z) à l'intérieur de l'enveloppe,
- une pluralité de soles (3) fixées à l'intérieur de l'enveloppe en étant parallèles entre elles, les soles comprenant chacune une ou plusieurs ouvertures débouchantes (30, 31) adaptée(s) pour transférer de la matière M râblée à la sole agencée immédiatement en dessous,
- au moins un bras de râblage fixé à l'arbre rotatif, au-dessus de chaque sole et comprenant des dents de râblage fixées perpendiculairement au bras, le ou les bras de râblage étant incurvé(s), les dents de râblage de chaque bras étant agencées de sorte que l'angle d'attaque par rapport à la matière M à traiter soit identique pour toutes les dents.

2. Four à soles multiples selon la revendication 1, la ou les ouvertures de transfert (30) d'une sole étant agencée(s) à proximité de l'arbre rotatif (4) tandis que celle(s) (31) de la sole adjacente est(sont) agencée(s) à la périphérie extérieure de ladite sole adjacente.

3. Four à soles multiples selon la revendication 1 ou 2, la ou des arêtes sont fournies avant des dents, dites arêtes d'attaque étant équidistantes (L2) les unes des autres sur la longueur du bras.

4. Four à soles multiples selon l'une des revendications précédentes, , le ou les bras de râblage étant incurvé(s) selon une portion d'ellipse.

5. Four à soles multiples selon la revendication 4, les bras de râblage au-dessus d'une même sole étant incurvés selon une même portion d'ellipse.

6. Four à soles multiples selon l'une des revendications précédentes, les dents de râblage présentant chacune une hauteur comprise entre 100 et 500 mm pour une longueur comprise entre 100 et 800 mm.

7. Four à soles multiples selon l'une des revendications précédentes, chaque dent de râblage étant plane.

8. Utilisation du four à soles multiples selon l'une des revendications précédentes pour la torréfaction de biomasse, notamment biomasse ligno-cellulosique, ou pour le traitement thermique de minerais (coke, chamotte...), de charbon, de boues de station d'épuration ou pour la fabrication d'un combustible de substitution au charbon d'origine fossile.

## Patentansprüche

1. Mehretagenofen (1), der zur thermischen Behandlung einer Materialcharge M bestimmt ist, umfassend:
- ein Gehäuse (2) mit zentralem Achse (Z), umfassend:
eine mündende obere Öffnung (20), die dazu bestimmt ist, mit der zu behandelnden Materialcharge versorgt zu werden,
eine mündende untere Öffnung (21), durch welche die behandelte Materialcharge abgeführt werden soll,
- eine Welle (4), die um die zentrale Achse (Z) drehend im Inneren des Gehäuses gelagert ist,
- eine Mehrzahl von Etagen (3), die im Inneren des Gehäuses parallel zueinander befestigt sind, wobei die Etagen jeweils eine oder mehrere mündende Öffnungen (30, 31) umfassen, die geeignet ist(sind), gekrähltes Material M zu der unmittelbar darunter angeordneten Etage zu transferieren,
- mindestens einen Krählarm, der an der drehenden Welle oberhalb jeder Etage befestigt ist und Krählzähne umfasst, die senkrecht zum Arm befestigt sind, wobei der oder die Krählarme gekrümmt ist(sind), wobei die Krählzähne jedes Arms so angeordnet sind, dass der Anströmwinkel in Bezug auf das zu behandelnde Material M bei allen Zähnen identisch ist.

2. Mehretagenofen nach Anspruch 1, wobei die Transferöffnung(en) (30) einer Etage in der Nähe der drehenden Welle (4) angeordnet ist(sind), während diejenige(n) (31) der benachbarten Etage am äußeren Umfang der benachbarten Etage angeordnet ist(sind).

3. Mehretagenofen nach Anspruch 1 oder 2, die oder mehrere Kanten vor Zähnen bereitgestellt werden, wobei diese Anströmkanten zueinander über die Länge des Arms abstandsgleich (L2) sind.

4. Mehretagenofen nach einem der vorhergehenden Ansprüche, wobei der oder die Krählarme gemäß einem Ellipsenabschnitt gekrümmt ist(sind).

5. Mehretagenofen nach Anspruch 4, wobei die Krählarme oberhalb einer selben Etage gemäß einem selben Ellipsenabschnitt gekrümmt sind.

6. Mehretagenofen nach einem der vorhergehenden Ansprüche, wobei die Krählzähne jeweils eine Höhe zwischen 100 und 500 mm bei einer Länge zwischen 100 und 800 mm aufweisen.

7. Mehretagenofen nach einem der vorhergehenden Ansprüche, wobei jeder Krählzahn plan ist.

8. Verwendung des Mehretagenofens nach einem der vorhergehenden Ansprüche zum Rösten von Biomasse, insbesondere lignocellulosehaltiger Biomasse, oder zur thermischen Behandlung von Mineralen (Koks, Schamotte usw.), Kohle, Kläranlagenschlämmen oder zur Herstellung eines Ersatzbrennstoffs für Kohle fossilen Ursprungs.

## Claims

1. Multiple-hearth furnace (1), intended to thermally treat a charge of material M, comprising:
- an enclosure (2) of central axis (Z) comprising:
a top opening aperture (20), intended to be supplied with the charge of material to be treated,
a bottom opening aperture (21), through which the treated charge of material is intended to be discharged,
- a shaft (4) mounted to rotate about the central axis (Z) inside the enclosure,
- a plurality of hearths (3) fixed inside the enclosure parallel to one another, the hearths each comprising one or more opening apertures (30, 31) suitable for transferring rabbled material M to the hearth arranged immediately below,
- at least one rabbling arm fixed to the rotary shaft, above each hearth and comprising rabbling teeth fixed at right angles to the arm, the rabbling arm or arms being incurved, the rabbling teeth of each arm being arranged such that the leading angle with respect to the material M to be treated is identical for all the teeth.

2. Multiple-hearth furnace according to Claim 1, the transfer aperture or apertures (30) of a hearth being arranged in proximity to the rotary shaft (4) while that or those (31) of the adjacent hearth is or are arranged at the outer periphery of said adjacent hearth.

3. Multiple-hearth furnace according to Claim 1 or 2, the edge or edges are provided before the teeth, said leading edges being equidistant (L2) from one another over the length of the arm.

4. Multiple-hearth furnace according to one of the preceding claims, the rabbling arm or arms being incurved according to a portion of ellipse.

5. Multiple-hearth furnace according to Claim 4, the rabbling arms above one and the same hearth being incurved according to a same portion of ellipse.

6. Multiple-hearth furnace according to one of the preceding claims, the rabbling teeth each having a height of between 100 and 500 mm for a length of between 100 and 800 mm.

7. Multiple-hearth furnace according to one of the preceding claims, each rabbling tooth being flat.

8. Use of the multiple-hearth furnace according to one of the preceding claims for the roasting of biomass, notably ligno-cellulosic biomass, or for the heat treatment of mineral ores (coke, chamotte, etc.), coal, purification station sludges or for the production of a substitute fuel for coal of fossil origin.
